# EUROPEAN PATENT SPECIFICATION

(11) **EP 1 176 078 B1**
(45) Date of publication and mention of the grant of the patent: **26.01.2005**
(21) Application number: 01118200.3
(22) Date of filing: 27.07.2001
(51) Int. Cl.: B61D 33/00, B60N 2/24

(54) **Method of producing a seat for railway vehicles, and seat produced using such a method**
Verfahren zur Herstellung eines Sitzes für Eisenbahnfahrzeuge und mit einem solchen Verfahren hergestellter Sitz
Procédé de fabrication d'un siège pour véhicules ferroviaires et siège fabriqué par un tel procédé

(30) Priority: 28.07.2000 IT TO000755
(43) Date of publication of application: 30.01.2002
(73) Proprietor: ANSALDOBREDA S.p.A., 80147 Napoli (IT)
(72) Inventor: Cassai, Paolo, 50142 Firenze (IT)
(74) Representative: Franzolin, Luigi

(56) References cited:
- EP-A- 0 330 594
- US-A- 4 099 780
- US-A- 4 776 635
- US-A- 5 924 771

## Description

The present invention relates to a method of producing a seat for rail vehicles, such as subway or surface trains and trams.

As is known, rail vehicle seats comprise a supporting structure defining at least one seat portion and a respective backrest, and which may be upholstered to improve passenger comfort and enhance the appearance of the seat, see for example EP-A1-0 330 594.

Rail vehicle seats are specially designed and manufactured to both ergonomic and user-vehicle specifications. In particular, the supporting structure is designed and sized according to the space available in the car, and above all according to the attachments provided for connection to the fixed structural car components, so that the supporting structure and upholstery normally differ from one vehicle to another.

The manufacture of known seats not only involves considerable time and cost in continually redesigning the component parts to different specifications, but also calls for the availability of widely differing raw materials, so that on-line storage facilities are invariably complex and extensive by having to comprise different storage areas for the component parts of each type of seat for assembly.

The time and cost involved in both raw material procurement and store management therefore account for a considerable increase in the end cost of the seats.

Moreover, to meet varying output rates of each type of seat, on-line machinery must be reset continually or changed at considerable cost in terms of time and equipment.

It is an object of the present invention to provide a method of producing a rail vehicle seat, designed to provide a straightforward, low-cost solution to the above problems.

According to the present invention, there is provided a method of producing a seat for rail vehicles, the method comprising the steps of producing a first supporting panel forming part of a backrest of said seat; producing a second supporting panel forming part of a seat portion of said seat; and connecting said seat portion and said backrest; and the method being characterized in that said panels are produced by forming a common starting element, elongated in a longitudinal direction and having a cross section of constant shape and size in said longitudinal direction; and by cutting said starting element transversely into a number of pieces, each defining a respective said panel.

The present invention also relates to a rail vehicle seat.

According to the present invention, there is provided a seat for rail vehicles, the seat comprising at least one seat portion in turn comprising a first supporting panel; at least one backrest in turn comprising a second supporting panel; and connecting means for connecting said seat portion to said backrest; said panels extending parallel to each other in a longitudinal direction; and the seat being characterized in that said panels have respective cross sections identical in shape and size.

A non-limiting embodiment of the invention will be described by way of example with reference to the accompanying drawings, in which:
Figure 1 shows a view in perspective of a first preferred embodiment of the rail vehicle seat according to the present invention;
Figure 2 shows a sectioned side view, with parts removed for clarity, of the Figure 1 seat;
Figure 3 shows a larger-scale view of a detail of the Figure 2 seat;
Figure 4 shows a schematic exploded view of a detail of the Figure 1 seat;
Figure 5 is similar to Figure 4, and shows a first variation of the Figure 1 seat;
Figures 6 and 7 are similar to Figure 1, and show partly exploded views of a second and third variation respectively of the Figure 1 seat;
Figure 8 shows a second preferred embodiment of the rail vehicle seat according to the present invention;
Figure 9 shows a schematic, larger-scale side view, with parts removed for clarity, of the Figure 8 seat in two operating positions;
Figure 10 is similar to Figure 8 and shows a variation of the Figure 8 seat.

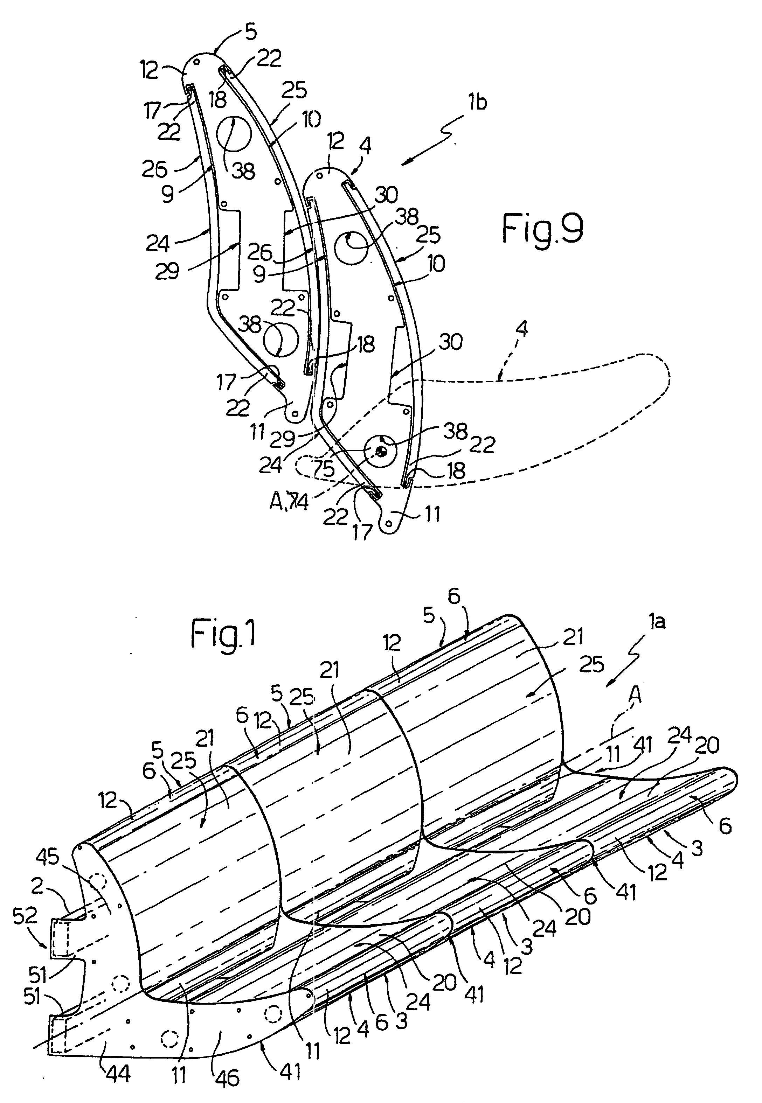

Number 1a in Figure 1 indicates a seat installed on a rail vehicle (not shown), such as a subway or surface train or tram, and fitted to a fixed structure 2 of the vehicle defined, in particular, by two longitudinal beams at different heights off the vehicle floor (not shown).

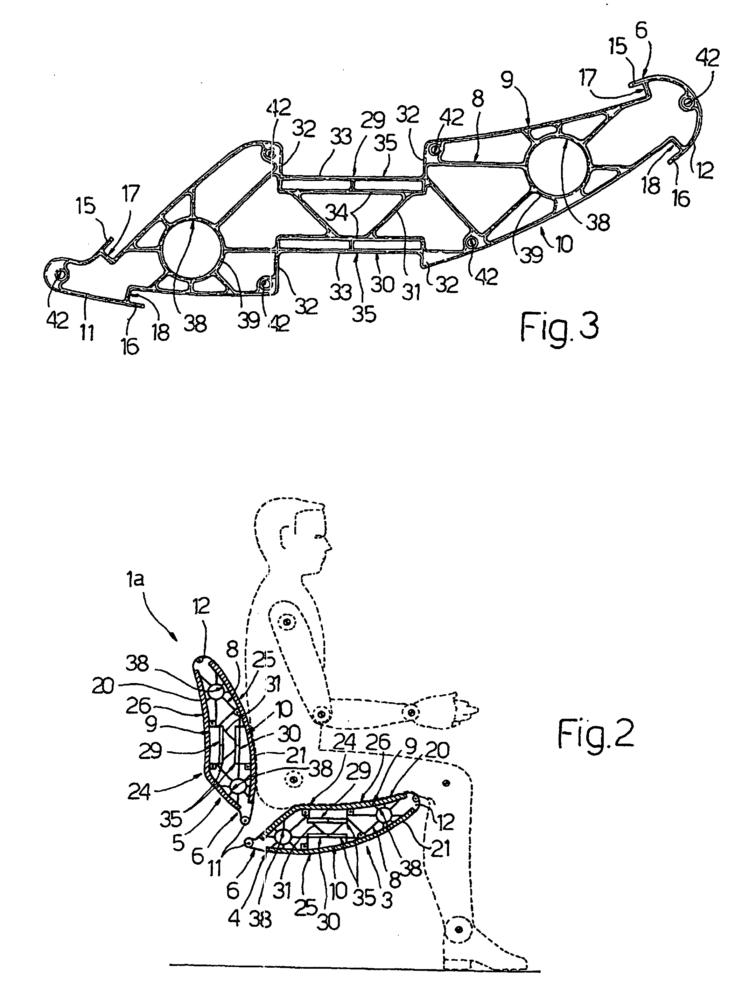

With reference to Figures 1 to 4, seat 1a extends in a longitudinal direction A (perpendicular to the Figure 2 and 3 plane), and comprises three modules 3 arranged side by side in direction A and each comprising a seat portion 4 and a backrest 5. Seat portions 4 and backrests 5 comprise respective supporting panels 6 extending parallel to direction A and having respective cross sections of the same shape and size. Each panel 6 is hollow, comprises a number of inner ribs 8 (Figures 2 and 3), and is defined by two opposite, contoured outer surfaces 9 and 10 parallel to direction A and connected to each other by two opposite longitudinal portions 11 and 12, of which portion 11 faces the other panel 6 of the same module 3.

Each portion 11, 12 is formed in one piece with two longitudinal tabs 15 and 16, which face respective surfaces 9 and 10 and define, together with surfaces 9 and 10, respective longitudinal grooves 17 and 18.

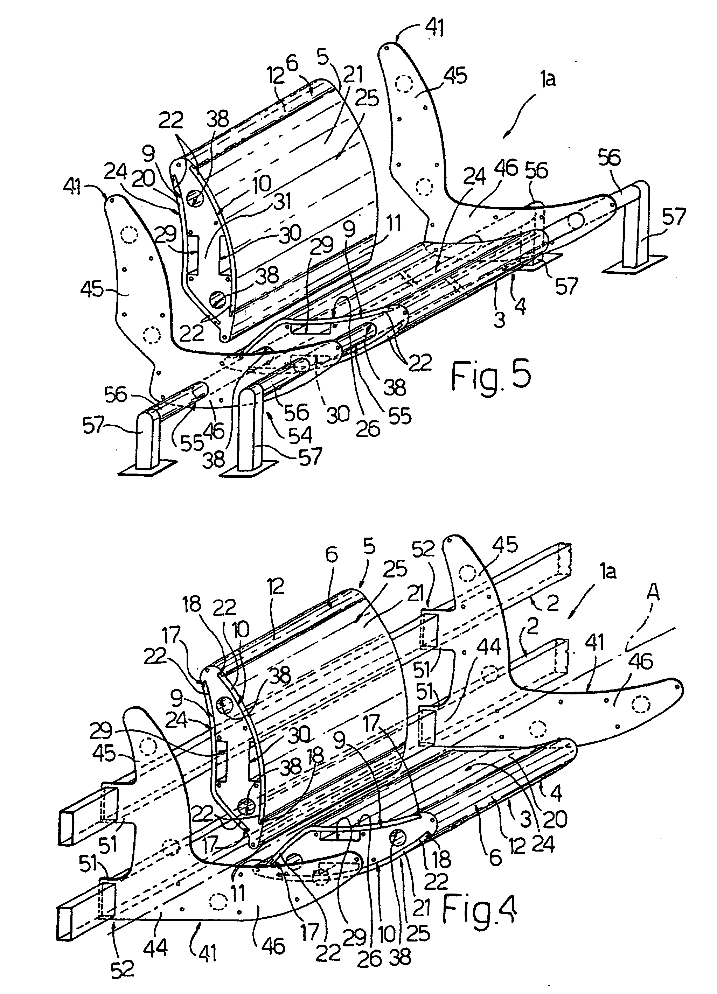

As shown in Figures 2 and 4, each panel 6 is fitted with two upholstering elements 20 and 21, which are placed on respective surfaces 9 and 10 and comprise respective lateral longitudinal portions 22 (Figure 4) removably engaging grooves 17 and 18. Elements 20 and 21 are preferably made of laminated plastic, fiberglass or padded material, and define respective outer surfaces 24 and 25.

In cross section, surface 25 is convex and defines the user-support portion of backrest 5 (as shown schematically by the dash line in Figure 2); while surface 24 comprises a concave portion 26 defining the user-support portion of seat portion 4 and having a profile substantially complementary to that of surface 25.

With reference to Figures 2 and 3, surfaces 9 and 10 define, together with respective elements 20 and 21, respective longitudinal channels 29 and 30 open outwards of panel 6 and formed in an intermediate portion 31 between portions 11 and 12.

With reference to Figure 3, each channel 29, 30 is defined by two facing lateral walls 32, and by a bottom wall 33 facing and adjacent to an inner longitudinal wall 34, which forms part of ribs 8, is spaced apart from wall 33, and defines, with wall 33, a portion 35 to which can be fixed a supporting member of seat 1a. Each panel 6 also comprises two inner longitudinal passages 38 located on opposite sides of portion 31 in respective intermediate positions between portion 31 and portions 11 and 12, and each defined by a circular cylindrical wall 39 forming part of ribs 8.

As shown in Figures 1 and 4, seat portion 4 and backrest 5 of each module 3 are connected to each other by two L-shaped sides 41, each of which is perpendicular to direction A, is formed in one piece, and is fixed to panels 6 of module 3, in particular by means of self-tapping screws screwed inside longitudinal holes 42 in panels 6 (Figure 3). Each side 41 comprises an intermediate portion 44; and two end portions 45 and 46, which close the inner cavities of panels 6 of backrest 5 and seat portion 4 respectively, and are positioned facing elements 20 and 21 so as to close the ends of grooves 17 and 18 and retain elements 20 and 21 on panels 6.

Each side 41 has two integral brackets 51, which form part of a mounting assembly 52 by which to fix seat 1a to the vehicle, project facing each other from respective portions 44 and 45, and are connected to respective beams of structure 2.

In the Figure 5 variation, sides 41 have no brackets 51, and a mounting assembly 54 is provided comprising two circular-section longitudinal supporting beams 55, which engage passages 38 in seat portion 4, and the end portions 56 of which project from the ends of seat 1a and are connected integrally to the floor by respective legs 57.

In a variation not shown, instead of beams 55, the mounting assembly comprises a rectangular-section beam, which engages channel 30 on seat portion 4 and, like beams 55, is connected integrally to the floor.

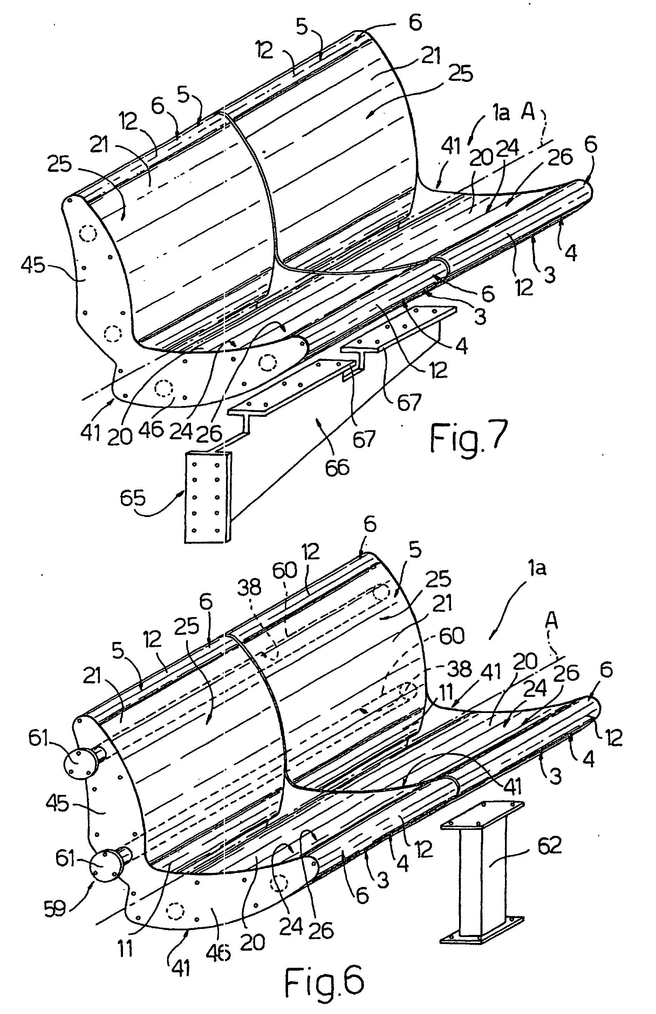

In the Figure 6 variation, a mounting assembly 59 is provided comprising two longitudinal supporting beams 60, which engage passages 38 in backrests 5, and each have an end flange 61 projecting from an end side 41 of seat 1a and connected integrally to a fixed lateral structure (not shown) of the vehicle. Assembly 59 also comprises a supporting leg 62, which is interposed between the floor and a seat portion 4, engages channel 30 of the seat portion 4, and is connected integrally, in particular by means of a number of screws, to portion 35.

In a variation not shown, the mounting assembly comprises two supporting legs 62 fitted to the seat portions 4 at opposite ends of seat 1a.

In the Figure 7 variation, a mounting assembly 65 is provided comprising a supporting bracket 66, which is connected integrally to a fixed lateral structure (not shown) of the vehicle, and has two plates 67 engaging channels 30 on seat portions 4 and connected integrally, in particular by means of a number of screws, to portions 35.

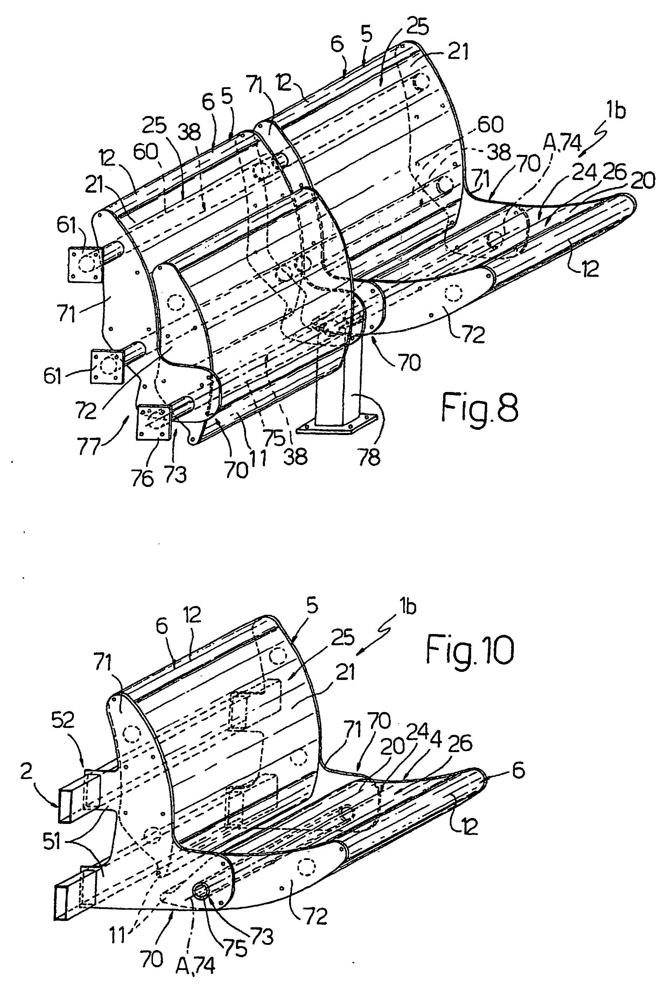

The Figure 8 and 9 embodiment relates to a seat 1b, the component parts of which are indicated, wherever possible, using the same reference numbers as for seat 1a.

Seat 1b differs from seat 1a by each module 3 comprising two sides 70, each of which comprises two plates 71 and 72 closing backrest 5 and seat portion 4 respectively; and seat portions 4 are connected to backrests 5 by a hinge device 73, so as to rotate, about a longitudinal axis 74, between a lowered position (shown by the dash line in Figure 9), and a raised position (shown by the continuous line in Figure 9) wherein portion 26 of surface 24 of seat portion 4 rests against surface 25 of backrest 5.

Device 73 comprises a cylindrical, circular-section, longitudinal supporting bar 75, which extends along axis 74, engages the passages 38 adjacent to portions 11 of seat portions 4, extends through plates 71 and 72, and is hinged to plates 71 and 72 along axis 74.

Bar 75 comprises an end portion 76, which projects from an end side 70 of seat 1b and is connected integrally to a fixed lateral structure (not shown) to form part of a mounting assembly 77 similar to assembly 59 in Figure 6. Unlike assembly 59, assembly 77 comprises one leg 78 supporting bar 75 in an intermediate position between two modules 3.

In the Figure 10 variation, seat 1b comprises the mounting assembly 52 shown in Figures 1 and 4.

To produce seat 1a, 1b, elements 20 and 21 are formed; sides 41, 70 are formed, in particular using laser cutting machines; and a starting element elongated in direction A and of constant cross section in direction A is extruded (Figure 3). The starting element, which is preferably made of aluminium alloy, is cut transversely into pieces of given length, each of which defines a panel 6 for a seat portion 4 or backrest 5; and each module 3 is assembled using two panels 6 of the same length and the mounting assembly provided according to the vehicle to which seat 1a, 1b is to be installed.

During assembly, the chosen panels 6 are covered with elements 20, 21 and connected to each other using sides 41, 70, so that surface 24 of seat portion 4 is positioned facing surface 25 of backrest 5. At the same time, the chosen mounting assembly is fitted, possibly with two or more modules 3 arranged side by side.

The structure of panels 6 and the way in which they are made therefore provide for obtaining modular seats 1a, 1b differing according to user vehicle specifications by simply changing the type of mounting assembly, the number of modules 3, and possibly the length of panels 6, the size and shape of the cross section of which, however, remain unchanged.

Unlike known solutions, using one type of panel 6 formed from a common starting element provides for greatly reducing raw material storage and for employing on-line stores, for panels 6 and elements 20, 21, which are much smaller and easier to manage.

For the same reasons, any changes in output rate to obtain the different variations of seats 1a, 1b involve only minor changes to machine settings, substantially to form the various mounting assemblies, and possibly to cut panels 6 to different lengths.

For the same reasons and given the extremely small number of component parts employed, seat 1a, 1b is cheaper to organize, produce and assemble as compared with known solutions. Moreover, besides being easy to assemble, the component parts of seat 1a, 1b are fastened firmly to the vehicle, also by virtue of double-walled portions 35 which provide for firm grip of the screws.

The structure of panels 6, besides providing for a modular, highly flexible seat 1a, 1b in terms of production range and on-vehicle installation, also enables seat 1a, 1b to support relatively high loads.

Being removable, and therefore interchangeable, elements 20, 21 can be selected from a number of different and/or low-cost elements to meet different design and functional requirements.

Clearly, changes may be made to the method of producing the seat described herein, without, however, departing from the scope of the present invention.

The beams may be inserted inside passages 38 and/or channels 29, 30 to simply reinforce seat 1a, 1b; and the components of seat 1a, 1b may be made of materials other than those indicated, and/or be connected to one another otherwise than as described and shown.

## Claims

1. A method of producing a seat (1a; 1b) for rail vehicles, the method comprising the steps of producing a first supporting panel (6) forming part of a backrest (5) of said seat (1a; 1b); producing a second supporting panel (6) forming part of a seat portion (4) of said seat (1a; 1b); and connecting said seat portion (4) and said backrest (5); and the method being **characterized in that** said panels (6) are produced by forming a common starting element, elongated in a longitudinal direction (A) and having a cross section of constant shape and size in said longitudinal direction (A); and by cutting said starting element transversely into a number of pieces, each defining a respective said panel (6).

2. A method as claimed in Claim 1, **characterized in that** said starting element is extruded in one piece.

3. A method as claimed in Claim 1 or 2, **characterized in that** the formation of said starting element comprises the formation of at least one longitudinal housing (38)(29)(30).

4. A seat for rail vehicles, the seat comprising at least one seat portion (4) in turn comprising a first supporting panel (6); at least one backrest (5) in turn comprising a second supporting panel (6); and connecting means (41; 70, 73) for connecting said seat portion (4) to said backrest (5); said panels (6) extending parallel to each other in a longitudinal direction (A); and the seat being **characterized in that** said panels (6) which are produced from a common starting element, have respective cross sections identical in shape and size.

5. A seat as claimed in Claim 4, **characterized in that** each said panel (6) is formed in one piece.

6. A seat as claimed in Claim 4 or 5, **characterized in that** each said panel (6), in cross section, has a hollow, internally ribbed structure.

7. A seat as claimed in Claim 6, **characterized in that** each said panel (6) comprises at least one longitudinal housing (38)(29)(30) engaged by an elongated longitudinal element (55; 60, 75).

8. A seat as claimed in Claim 7, **characterized by** comprising fastening means (52; 54; 59; 65; 77) for connection to a fixed structure (2) of said vehicle; said elongated longitudinal element (55; 60; 75) comprising at least one projecting end portion (56; 61; 76) forming part of said fastening means (54; 59; 77).

9. A seat as claimed in Claim 7 or 8, **characterized in that** said elongated longitudinal element (75) defines a hinge pin forming part of said connecting means (70, 73) and permitting rotation of said seat portion (4) with respect to said backrest (5).

10. A seat as claimed in any one of Claims 7 to 9, **characterized in that** said longitudinal housing (38) (29) (30) defines an inner longitudinal passage (38).

11. A seat as claimed in any one of Claims 7 to 10, **characterized in that** said longitudinal housing (38) (29) (30) defines a longitudinal channel (29) (30) open outwards of the respective said panel (6).

12. A seat as claimed in Claims 10 and 11, **characterized in that** each said panel (6) comprises, in cross section, two opposite said longitudinal channels (29)(30) formed in an intermediate portion (31); and two said longitudinal passages (38) formed on opposite lateral sides of said intermediate portion (31).

13. A seat as claimed in any one of Claims 7 to 12, **characterized in that** each said panel (6) comprises at least one fastening portion (35) by which to fasten a supporting member (62; 66) of the seat (1a; 1b), and which comprises an outer wall (33) and an inner wall (34) facing each other.

14. A seat as claimed in Claim 13, **characterized in that** said outer wall (33) defines a said longitudinal housing (29) (30).

15. A seat as claimed in any one of Claims 4 to 14, **characterized in that** said panels (6) are fitted with respective upholstering elements (20, 21) defining respective supporting surfaces (24, 25) for a user; retaining means (17, 18, 41; 17, 18, 70) being provided to retain said upholstering elements (20, 21) on said panels (6), and comprising at least one longitudinal guide (17, 18) integral with each said panel (6) and engaged removably by a relative upholstering element (20, 21).

16. A seat as claimed in Claim 15, **characterized in that** said retaining means (17, 18, 41; 17, 18, 70) comprise closing walls (41; 70) at the ends of said longitudinal guide (17, 18).

17. A seat as claimed in Claim 16, **characterized in that** said closing walls (41; 70) form part of said connecting means (41; 70, 73).

18. A seat as claimed in any one of Claims 4 to 17, **characterized by** comprising fastening means (52; 54; 59; 65; 77) for connection to a fixed structure (2) of said vehicle; said connecting means (41; 70, 73) comprising at least two sides (41; 70) extending on opposite sides of said seat portion (4) and said backrest (5), and each comprising at least one bracket (51) forming part of said fastening means (52).

## Patentansprüche

1. Verfahren zum Herstellen eines Sitzes (1a; 1b) für Schienenfahrzeuge, wobei das Verfahren die folgenden Schritte enthält: Herstellen einer ersten Trägerplatte (6), welche einen Teil einer Lehne (5) des Sitzes (1a; 1b) bildet; Herstellen einer zweiten Trägerplatte (6), welche einen Teil eines Sitzabschnitts (4) des Sitzes (1a; 1b) bildet; und Verbinden des Sitzabschnitts (4) und der Lehne (5); und wobei das Verfahren **dadurch gekennzeichnet ist, dass** die Platten (6) durch das Bilden eines gemeinsamen Ausgangselements hergestellt sind, welches in einer Längsrichtung (A) verlängert ist und einen Querschnitt einer konstanten Form und Größe in die Längsrichtung (A) aufweist; und durch das transversale Schneiden des Ausgangselements in eine Anzahl von Stücken, welche jeweils eine entsprechende Platte (6) definieren.

2. Verfahren nach Anspruch 1, **dadurch gekennzeichnet, dass** das Ausgangselement in einem Stück extrudiert wird.

3. Verfahren nach Anspruch 1 oder 2, **dadurch gekennzeichnet, dass** die Bildung des Ausgangselements die Bildung von mindestens einem Längsgehäuse (38) (29) (30) aufweist.

4. Sitz für Schienenfahrzeuge, wobei der Sitz mindestens einen Sitzabschnitt (4), welcher wiederum eine erste Trägerplatte (6) aufweist; mindestens eine Lehne (5), welche wiederum eine zweite Trägerplatte (6) aufweist; und Verbindungselemente (41; 70, 73) zum Verbinden des Sitzabschnitts (4) mit der Lehne (5) aufweist; die Platten (6) in einer Längsrichtung (A) parallel zueinander verlaufen; und der Sitz **dadurch gekennzeichnet ist, dass** die Platten (6), welche aus einem gemeinsamen Ausgangselement hergestellt werden, entsprechende Querschnitte aufweisen, welche eine identische Form und Größe aufweisen.

5. Sitz nach Anspruch 4, **dadurch gekennzeichnet, dass** jede Platte (6) in einem Stück gebildet ist.

6. Sitz nach Anspruch 4 oder 5, **dadurch gekennzeichnet, dass** jede Platte (6) im Querschnitt eine hohle, auf der Innenseite gerippte Struktur aufweist.

7. Sitz nach Anspruch 6, **dadurch gekennzeichnet, dass** jede Platte (6) mindestens ein Längsgehäuse (38) (29) (30) aufweist, welches durch ein verlängertes Längselement (55; 60, 75) in Eingriff steht.

8. Sitz nach Anspruch 7, **gekennzeichnet durch** das Aufweisen von Befestigungselementen (52; 54; 59; 65; 77) zur Verbindung mit einer festen Struktur (2) des Fahrzeugs; wobei das verlängerte Längselement (55; 60; 75) mindestens einen vorstehenden Endabschnitt (56; 61; 76) aufweist, welcher einen Teil der Befestigungselemente (54; 59; 77) bildet.

9. Sitz nach Anspruch 7 oder 8, **dadurch gekennzeichnet, dass** das verlängerte Längselement (75) einen Gelenkbolzen definiert, welcher einen Teil der Verbindungselemente (70; 73) bildet und die Drehung des ersten Sitzabschnitts (4) in Bezug auf die Lehne (5) zulässt.

10. Sitz nach einem der Ansprüche 7 bis 9, **dadurch gekennzeichnet, dass** das Längsgehäuse (38) (29) (30) einen inneren Längsdurchgang (38) definiert.

11. Sitz nach einem der Ansprüche 7 bis 10, **dadurch gekennzeichnet, dass** das Längsgehäuse (38) (29) (30) einen Längskanal (29) (30) definiert, welcher von der jeweiligen Platte (6) nach außen offen ist.

12. Sitz nach Anspruch 10 und 11, **dadurch gekennzeichnet, dass** jede Platte (6) im Querschnitt zwei gegenüberliegende Längskanäle (29) (30), welche in einem Zwischenabschnitt (31) gebildet sind; und zwei Längsdurchgänge (38) aufweist, welche auf gegenüberliegenden Seitenflächen des Zwischenabschnitts (31) gebildet sind.

13. Sitz nach einem der Ansprüche 7 bis 12, **dadurch gekennzeichnet, dass** jede Platte (6) mindestens einen Befestigungsabschnitt (35) aufweist, durch welchen ein Trägerelement (62; 66) des Sitzes (1a; 1b) zu befestigen ist und welcher eine Außenwand (33) und einen Innenwand (34) aufweist, welche zueinander weisen.

14. Sitz nach Anspruch 13, **dadurch gekennzeichnet, dass** die Außenwand (33) das Längsgehäuse (29) (30) definiert.

15. Sitz nach einem der Ansprüche 4 bis 14, **dadurch gekennzeichnet, dass** die Platten (6) mit entsprechenden Polsterelementen (20, 21) ausgestattet sind, welche die jeweiligen Trägerflächen (24, 25) für einen Benutzer definieren; die Haltevorrichtungen (17, 18, 41; 17, 18, 70) vorgesehen sind, um 'die Polsterelemente (20, 21) auf den Platten (6) zu halten, und mindestens eine Längsführung (17, 18) aufweisen, welche mit der Platte (6) einstückig ist und durch ein relatives Polsterelement (20, 21) lösbar in Eingriff steht.

16. Sitz nach Anspruch 15, **dadurch gekennzeichnet, dass** die Haltevorrichtungen (17, 18, 41; 17, 18, 70) schließende Wände (41; 70) an den Enden der Längsführung (17, 18) aufweisen.

17. Sitz nach Anspruch 16, **dadurch gekennzeichnet, dass** die schließenden Wände (41; 70) einen Teil der Verbindungselemente (41; 70, 73) bilden.

18. Sitz nach einem der Ansprüche 4 bis 17, **gekennzeichnet durch** das Aufweisen von Befestigungsvorrichtungen (52; 54; 59; 65; 77) zur Verbindung mit einer festen Struktur (2) des Fahrzeugs; wobei die Verbindungselemente (41; 70, 73) mindestens zwei Seiten (41; 70) aufweisen, welche auf gegenüberliegenden Seiten des Sitzabschnitts (4) und der Lehne (5) verlaufen, und jedes mindestens einen Träger (51) aufweist, welcher einen Teil der Befestigungsvorrichtung (52) bildet.

## Revendications

1. Procédé de production d'un siège (1a ; 1b) pour les véhicules à rail, le procédé comprenant les phases de production d'un premier panneau de support (6) faisant partie d'un dossier (5) dudit siège (1a, 1b) ; de production d'un second panneau de support (6) faisant partie d'une portion de siège (4) dudit siège (1a, 1b) ; et le raccordement de ladite portion de siège (4) et dudit dossier (5) ; et le procédé étant **caractérisé en ce que** lesdits panneaux (6) sont produits en formant un élément de départ commun, allongé dans un sens longitudinal (A) et ayant une coupe transversale, de forme et de taille constantes dans ledit sens longitudinal (A) ; et en coupant ledit élément de départ de manière transversale en un certain nombre de morceaux, chacun définissant un panneau respectif (6).

2. Procédé selon la revendication 1, **caractérisé en ce que** ledit élément de départ est extrudé en un morceau.

3. Procédé selon la revendication 1 ou 2, **caractérisé en ce que** la formation dudit élément de départ comprend la formation d'au moins un logement longitudinal (38) (29) (30).

4. Siège pour véhicule à rails, le siège comprenant au moins une portion de siège (4) comprenant à son tour un premier panneau de support (6) ; au moins un dossier (5) comprenant à son tour un second panneau de support (6) ; et des systèmes de raccordement (41, 70, 73) pour relier ladite portion de siège (4) audit dossier (5) ; lesdits panneaux (6) s'étendant parallèlement les uns aux autres dans une direction longitudinale (A) ; et le siège étant **caractérisé en ce que** lesdits panneaux (6) qui sont produits à partir d'un élément de départ commun, ont des coupes transversales respectives identiques en forme et en taille.

5. Siège selon la revendication 4, **caractérisé en ce que** chacun desdits panneaux (6) est formé en un morceau.

6. Siège selon la revendication 4 ou 5, **caractérisé en ce que** chacun desdits panneaux (6), en coupe transversale, a une structure creuse, nervurée intérieurement.

7. Siège selon la revendication 6, **caractérisé en ce que** chacun desdits panneaux (6) comprend au moins un logement longitudinal (38) (29) (30), dans lequel s'engage un élément longitudinal allongé (55, 60, 75).

8. Siège selon la revendication 7, **caractérisé en ce qu'**il comprend des systèmes de fixation (52, 54, 59, 65, 77) pour le raccordement à une structure fixe (2) dudit véhicule ; ledit élément longitudinal allongé (55, 60, 75) comprenant au moins une portion extrême saillante (56, 61, 76) faisant partie desdits systèmes de fixation (54, 59, 77).

9. Siège selon la revendication 7 ou 8, **caractérisé en ce que** ledit élément longitudinal allongé (75) définit une cheville articulée faisant partie desdits systèmes de raccordement (70, 73) et permettant une rotation de ladite portion du siège (4) relativement audit dossier (5).

10. Siège selon l'une quelconque des revendications 7 à 9, **caractérisé en ce que** ledit logement longitudinal (38) (29) (30) définit un passage longitudinal interne (38).

11. Siège selon l'une quelconque des revendications 7 à 10, **caractérisé en ce que** ledit logement longitudinal (38) (29) (30) définit un canal longitudinal (29) (30) ouvert vers l'extérieur dudit panneau respectif (6).

12. Siège selon les revendications 10 et 11, **caractérisé en ce que** chacun desdits panneaux (6) comprend, en coupe transversale, deux canaux longitudinaux opposés (29) (30) formés en une portion intermédiaire (31) ; et deux passages longitudinaux (38) formés sur les côtés latéraux opposés de ladite portion intermédiaire (31).

13. Siège selon l'une quelconque des revendications 7 à 12, **caractérisé en ce que** chacun desdits panneaux (6) comprend au moins une portion de fixation (35) par laquelle on peut fixer un élément de support (62, 66) du siège (1a, 1b), et qui comprend une paroi extérieure (33) et une paroi intérieure (34) en face l'une de l'autre.

14. Siège selon la revendication 13, **caractérisé en ce que** ladite paroi extérieure (33) définit un logement longitudinal (29) (30).

15. Siège selon l'une quelconque des revendications 4 à 14, **caractérisé en ce que** lesdits panneaux (6) sont équipés d'éléments de rembourrage respectifs (20, 21) définissant des surfaces de support respectives (24, 25) pour un utilisateur ; des dispositifs de retenue (17, 18, 41, 17, 18, 70) étant fournis pour retenir lesdits éléments de rembourrage (20, 21) sur lesdits panneaux (6), et comprenant au moins un guide longitudinal (17, 18) contenu dans chacun desdits panneaux (6) et engagé de façon amovible par un élément de rembourrage correspondant (20, 21).

16. Siège selon la revendication 15, **caractérisé en ce que** lesdits dispositifs de retenue (17, 18, 41, 17, 18, 70) comprennent des parois de fermeture (41, 70) aux extrémités dudit guide longitudinal (17, 18)

17. Siège selon la revendication 16, **caractérisé en ce que** lesdites parois de fermeture (41, 70) font partie desdits dispositifs de raccordement (41, 70, 73).

18. Siège selon l'une quelconque des revendications 4 à 17, **caractérisé en ce qu'**il comprend des systèmes de fixation (52, 54, 59, 65, 77) pour la connexion à une structure fixe (2) dudit véhicule ; lesdits systèmes de raccordement (41, 70, 73) comprenant au moins deux côtés (41, 70) s'étendant sur les côtés opposés de ladite portion de siège (4) et ledit dossier (5), et chacun comprenant au moins un support (51) faisant partie desdits dispositifs de fixation (52).
